# EUROPÄISCHE PATENTSCHRIFT

(11) **EP 2 899 603 B1**
(45) Veröffentlichungstag und Bekanntmachung des Hinweises auf die Patenterteilung: **01.06.2022**
(21) Anmeldenummer: 14152449.6
(22) Anmeldetag: 24.01.2014
(51) Int. Cl.: G05B 19/042

(54) **Projektieren eines Feldbussystems**
Planning of a field bus system
Projection de système de bus de terrain

(43) Veröffentlichungstag der Anmeldung: 29.07.2015
(73) Patentinhaber: Siemens Aktiengesellschaft, 80333 München (DE)
(72) Erfinder: Turnaus, Andre, 90562 Heroldsberg (DE)

(56) Entgegenhaltungen:
- EP-A2- 1 594 023
- WO-A1-2010/138412
- DE-A1-102011 107 321
- US-A1- 2008 301 270
- US-A1- 2012 093 242
- "FOUNDATION(TM) fieldbus Device Descriptor Explorer Software (DD Explorer)", , 31. Dezember 2004 (2004-12-31), Seiten 1-4, XP055120192, Gefunden im Internet: URL:http://resource.invensys.com/iaseries/ pss/21s1/21s1c3b3.pdf [gefunden am 2014-05-26]

## Beschreibung

Die Erfindung betrifft ein Verfahren zum Projektieren eines Feldbussystems mit einem Feldbusmaster und wenigstens einem Feldgerät.

In einem Feldbussystem verbindet ein Feldbus Feldgeräte, d. h. Sensoren und Aktoren, mit einem den über den Feldbus geführten Datenverkehr steuernden Feldbusmaster. Feldbussysteme werden insbesondere in der Automatisierungstechnik eingesetzt und häufig mit einem so genannten Engineeringsystem rechnergestützt projektiert. Mittels eines derartigen Engineeringsystems werden analog zur physikalisch vorhandenen Anlage, d. h. analog zu dem realen Feldbusssystem, Objekte für den Feldbusmaster, den Feldbus und die Feldgeräte angelegt und projektiert. Nach Fertigstellung der Projektierung wird die gesamte Konfiguration mittels eines so genannten Download auf die Anlage geladen.

Die vorliegende Erfindung betrifft vorrangig die Projektierung der Feldgeräte (Sensoren und Aktoren) eines Feldbussystems. Diese Feldgeräte werden als so genannte Slaves des Feldbussystems projektiert. Jeder Slave besitzt ein so genanntes Slaveprofil. Darunter werden hier aus Sicht des Feldbussystems notwendige und hinreichende Systemeigenschaften des Slave verstanden, die der Feldbusmaster zum Betrieb aller ihm zugeordneten Slaves benötigt. Derartige Eigenschaften sind beispielsweise die Anzahl und Art der Ein- und Ausgänge, über die die Feldgeräte jeweils Daten über den Feldbus empfangen und senden. Die projektierten Slaveprofile werden bei dem Download dem physikalisch vorhandenen Feldbusmaster übermittelt.

Aus der EP 1 594 023 A2 ist ein Verfahren zur automatischen Konfiguration eines Prozesssteuerungssystem bekannt, umfassend einen Master und zumindest einen Slave. Der Master steuert den mindestens einen Slave über ein Bus-System, und verarbeitet Daten von dem zumindest einen Slave, wobei der Master automatisch den zumindest einen Slave über das Bussystem erkennt. Der Master erzeugt anschließend eine Vorrichtungskonfiguration zum Einrichten des Slaves gemäß seiner Identifizierung derart, dass der Slave automatisch im Prozessleitsystem betrieben werden kann.

Aus der US 2012/0093242 A1 ist ein Feldgerät mit einer Selbstbeschreibung bekannt. Das Feldgerät umfasst eine Ringkommunikationsschaltung, die konfiguriert ist, Prozessinformationen unter Verwendung eines Standardkommunikationsprotokolls zu kommunizieren. Eine Steuerung ist mit der Ringkommunikationsschaltung gekoppelt, um mit einem oder mehreren Prozessgeräten über die Ringkommunikationsschaltungen zu kommunizieren. Die Steuerung ist mit einem Speichermedium mit einer Vielzahl von Blöcken verbunden, wobei ein erster Block einen ausführbaren Code enthält, der, wenn er von der Steuerung ausgeführt wird, bewirkt, für das Feldgerät eine Prozeßsteuerungsfunktion bereitzustellen. Ein zweiter Block, der mindestens so groß wie der erste Block ist, dient einer elektronischen Gerätebeschreibung des Feldgeräts.

Der Erfindung liegt die Aufgabe zugrunde, ein verbessertes Verfahren zum Projektieren eines Feldbussystems anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem Verfahren zum Projektieren eines Feldbussystems mit einem Feldbusmaster und wenigstens einem Feldgerät wird wenigstens ein Feldgerät zunächst als ein Universalslave, der ein Slaveprofil mit von dem Feldbusmaster benötigten Eigenschaften des Feldgerätes aufweist, mit einer eindeutigen Feldbusadresse projektiert. Anschließend wird wenigstens ein Universalslave durch einen zu seinem Slaveprofil korrespondierenden Produktslave aus einem in einem Datenspeicher abgelegten Produktkatalog unter Beibehaltung der Feldbusadresse des Universalslave ersetzt. Dabei wird ein Produktslave als zu einem Slaveprofil korrespondierend bezeichnet, wenn er alle Eigenschaften dieses Slaveprofils aufweist und diese Eigenschaften um Zusatzdaten erweitert.

Ein Universalslave enthält ausschließlich das Slaveprofil, d. h. exakt die Informationen, die der Feldbusmaster für den Betrieb des Slaves benötigt. Ein Universalslave ist insofern universell, als er stellvertretend für eine Vielzahl unterschiedlicher konkreter Slaves (aber mit gleichem Slaveprofil) verwendet werden kann.

Ein Produktslave ist ein konkreter Slave mit einer Bestellnummer. Er enthält sowohl das für den Feldbusmaster notwendige Slaveprofil als auch produktspezifische Zusatzdaten. Diese Zusatzinformationen generieren im Engineeringsystem Mehrwertfunktionen, beispielsweise eine Darstellung des konkreten Anlagenaufbaus im Engineeringsystem, die Anzeige nicht-technischer oder für die Projektierung nicht relevanter Produktinformationen (wie z. B. einen Preis, eine Gehäusefarbe oder eine Bestellnummer), eine Verknüpfung mit einem Katalog- und Bestellsystem, ein Foto bzw. eine fotorealistische Darstellung, oder/und eine verbesserte Parametrierung, da Parameterdaten auf konkrete Technologieeigenschaften abgebildet werden können.

Es hat also Vorteile, anstelle von Universalslaves konkrete Produktslaves zur Projektierung zu verwenden. Auf der anderen Seite gibt es Anwendungsszenarien, bei denen zunächst nur Universalslaves erzeugt werden (können). So liefert beispielsweise der Feldbusmaster beim Auslesen (einem so genannten Upload) nur die Profilinformationen der Feldgeräte. Aus diesen können deshalb im Engineeringsystem nur Universalslaves erzeugt werden, da aus den Profilinformationen kein konkreter Produktslave zugeordnet werden kann. Auch bei anderen Szenarien, z. B. bei einer Migration aus Altsystemen oder einem Import von Slaveprofilen aus anderen Systemen, kann es sein, dass die zur Verfügung stehenden Informationen nicht zur eindeutigen Identifikation eines Slave ausreichen. Auch in diesen Fällen wird daher zunächst ein Universalslave erzeugt.

Das erfindungsgemäße Verfahren ermöglicht es, bei der Projektierung zunächst verwendete Universalslaves später durch Produktslaves zu ersetzen und dadurch zu konkretisieren. Dadurch wird vorteilhaft einerseits berücksichtigt, dass die Verwendung von Universalslaves oft unvermeidlich ist, andererseits können die Vorteile der Verwendung von Produktslaves dennoch genutzt werden.

Eine Ausgestaltung der Erfindung sieht vor, dass wenigstens ein Prüfkriterium für eine Ersetzbarkeit eines Universalslave durch einen Produktslave definiert wird, die Ersetzbarkeit eines Universalslave durch einen als Ersatz für den Universalslave vorgesehenen Produktslave automatisch anhand des wenigstens einen Prüfkriteriums geprüft wird und der Universalslave durch diesen Produktslave nur dann ersetzt wird, wenn das Ergebnis der Prüfung auf Ersetzbarkeit positiv ist.

Als wenigstens ein Prüfkriterium wird dabei beispielsweise definiert, dass der Produktslave zu dem Slaveprofil des Universalslave korrespondiert oder für dasselbe Feldbussystem wie der Universalslave bestimmt ist oder ein Grundtyp des Produktslave und des Universalslave übereinstimmt.

Eine derartige automatische Prüfung der Ersetzbarkeit eines Universalslave durch einen Produktslave verhindert vorteilhaft Projektierungsfehler, die durch eine Ersetzung von Universalslaves durch unpassende Produktslaves entstehen.

Zum Ersetzen eines Universalslave wird dabei beispielsweise ein Produktslave manuell aus dem Produktkatalog ausgewählt.

Eine derartige manuelle Auswahl kann beispielsweise mittels einer grafischen Benutzeroberfläche realisiert werden, die einen Projekteur bei der Projektierung unterstützt. Es wird einem Projekteur also vorteilhaft ermöglicht, Produktslaves für zu ersetzende Universalslaves auszuwählen, wobei fehlerhafte Ersetzungen durch die automatische Prüfung der Ersetzbarkeit eines Universalslave durch einen Produktslave verhindert werden.

Eine alternative oder zusätzliche Ausgestaltung der Erfindung sieht vor, dass ein durch einen Produktslave zu ersetzender Universalslave ausgewählt wird, aus dem Produktkatalog automatisch eine Auswahlmenge von zu dem Slaveprofil des ausgewählten Universalslave korrespondierenden Produktslaves ermittelt wird, und der ausgewählte Universalslave durch einen Produktslave der Auswahlmenge ersetzt wird.

Bei dieser Ausgestaltung der Erfindung werden also zu dem Slaveprofil eines Universalslave korrespondierende Produktslaves ermittelt, so dass ein Projekteur zur Ersetzung eines Universalslave nicht den gesamten Produktkatalog nach einem geeigneten Produktslave durchsuchen muss, sondern nur noch einen der ermittelten zu dem Universalslave passenden Produktslaves auszuwählen braucht.

Eine weitere alternative oder zusätzliche Ausgestaltung der Erfindung sieht vor, dass wenigstens einem Slaveprofil genau ein zu dem Slaveprofil korrespondierender Produktslave zugeordnet wird, und jeder Universalslave, dessen Slaveprofil dadurch ein Produktslave zugeordnet ist, automatisch durch den seinem Slaveprofil zugeordneten Produktslave ersetzt wird.

Auf diese Weise können Universalslaves automatisch durch Produktslaves ersetzt und dadurch ein Projekteur entlastet werden. Die automatisierte Ersetzung wird dabei durch die Zuordnung genau eines Produktslave zu einem Slaveprofil ermöglicht, da in der Regel verschiedene Produktslaves mit demselben Slaveprofil existieren, so dass eine automatische Ersetzung ohne eine eindeutige Zuordnung nicht möglicht ist.

Eine weitere alternative oder zusätzliche Ausgestaltung der Erfindung sieht vor, dass wenigstens eine Slavemenge mehrerer Universalslaves durch einen Multi-Produktslave, der aus mehreren internen Produktslaves besteht, ersetzt wird, so dass jeder Universalslave der Slavemenge durch einen zu seinem Slaveprofil korrespondierenden internen Produktslave des Multi-Produktslave ersetzt wird und jeder interne Produktslave des Multi-Produktslave einen Universalslave der Slavemenge ersetzt.

Unter einem Multi-Produktslave wird dabei ein in dem Produktkatalog aufgeführter und selektierbarer Slave verstanden, der jedoch aus mehreren internen Produktslaves besteht, die über jeweils eine eigene Feldbusadresse in das Feldbussystem eingebunden werden. Der Feldbusmaster kommuniziert nur mit den internen Produktslaves, d. h. er kennt keine Multi-Produktslaves und unterscheidet nicht zwischen einzelnen Produktslaves und internen Produktslaves von Multi-Produktslaves.

Die vorgenannte Ausgestaltung der Erfindung ermöglicht vorteilhaft, auch Multi-Produktslaves zur Ersetzung von Universalslaves zu verwenden.

Eine Weitergestaltung dieser Ausgestaltung sieht vor, dass eine Slavemenge mehrerer jeweils durch einen Produktslave zu ersetzender Universalslaves ausgewählt wird, aus dem Produktkatalog automatisch eine Auswahlmenge von Multi-Produktslaves, die jeweils die ausgewählte Slavemenge ersetzen können, ermittelt wird und die ausgewählte Slavemenge durch einen Multi-Produktslave der Auswahlmenge ersetzt wird.

Diese Weitergestaltung vereinfacht vorteilhaft die Ersetzung mehrerer Universalslaves durch einen Multi-Produktslave, indem zu einer Slavemenge von Universalslaves passende Multi-Produktslaves automatisch ermittelt werden, so dass von einem Projekteur nur noch einer der ermittelten Multi-Produktslaves ausgewählt werden braucht.

Eine alternative oder zusätzliche Weitergestaltung sieht vor, dass wenigstens einer Profilmenge von Slaveprofilen genau ein zu der Profilmenge korrespondierender Multi-Produktslave zugeordnet wird, der zu den Slaveprofilen der Profilmenge korrespondierende interne Produktslaves aufweist, und dass wenigstens eine Slavemenge, deren Profilmenge dadurch ein Multi-Produktslave zugeordnet ist, automatisch durch den ihrer Profilmenge zugeordneten Multi-Produktslave ersetzt wird.

Diese Weitergestaltung ermöglicht vorteilhaft eine automatische Ersetzung von Universalslaves durch Multi-Produktslaves analog zu der oben genannten automatischen Ersetzung einzelner Universalslaves durch Produktslaves.

Bei dieser Weitergestaltung wird vorzugsweise für einen Multi-Produktslave, der einer Profilmenge zugeordnet wird, zu der sich verschiedene Slavemengen bilden lassen, aus diesen verschiedenen Slavemengen eine Kombination paarweise disjunkter Slavemengen ausgewählt, und jede Slavemenge dieser Kombination wird automatisch durch den Multi-Produktslave ersetzt.

Dadurch wird vorteilhaft berücksichtigt, dass eine automatische Ersetzung mehrerer Universalslaves mit einer bestimmten Profilmenge durch einen dazu korrespondierenden Multi-Produktslave nicht immer ohne Weiteres möglich ist, da der Fall auftreten kann, dass ein Multi-Produktslave einer Profilmenge zugeordnet wird, zu der sich verschiedene Slavemengen bilden lassen. Um dennoch eine automatische Ersetzung vorzunehmen, wird unter den verschiedenen Slavemengen mit derselben Profilmenge eine Kombination paarweise disjunkter Slavemengen ausgewählt, die jeweils durch den der Profilmenge zugeordneten Multi-Produktslave ersetzt werden.

Für die Auswahl einer derartigen Kombination paarweise disjunkter Slavemengen mit derselben Profilmenge sieht die Erfindung verschiedene alternative Auswahlmethoden vor:

Eine erste Auswahlmethode sieht vor, eine Kombination paarweise disjunkter Slavemengen automatisch anhand der Feldbusadressen der Universalslaves auszuwählen. Dabei wird vorteilhaft ausgenutzt, dass verschiedene Universalslaves mit demselben Slaveprofil durch ihre Feldbusadressen unterscheidbar sind.

Eine zweite Auswahlmethode sieht vor, dass verschiedene mögliche Kombinationen paarweise disjunkter Slavemengen automatisch anhand der Feldbusadressen der Universalslaves ermittelt werden und eine dieser ermittelten Kombinationen manuell ausgewählt wird. Auch diese Auswahlmethode nutzt die Unterscheidbarkeit von Universalslaves mit demselben Slaveprofil anhand ihrer unterschiedlichen Feldbusadressen, stellt dem Projekteur jedoch eine Auswahloption zur Verfügung statt eine automatische Ersetzung vorzunehmen.

Eine dritte Auswahlmethode sieht vor, dass eine Liste aller Universalslaves mit einem Slaveprofil aus der Profilmenge, zu der der Multi-Produktslave korrespondiert, ermittelt wird und eine Kombination paarweise disjunkter Slavemengen manuell aus den Universalslaves der ermittelten Liste zusammengestellt wird. Dabei wird automatisch überwacht, dass jede zusammengestellte Slavemenge die Profilmenge, zu der der Multi-Produktslave korrespondiert, aufweist und die zusammengestellten Slavemengen paarweise disjunkt sind. Bei dieser Auswahlmethode stellt der Projekteur eine Kombination paarweise disjunkter Slavemengen manuell zusammen. Diese Auswahlmethode kann beispielsweise vorteilhaft in einem weiter unten beschriebenen Zuordnungsdialog umgesetzt werden.

Bei der automatischen Ersetzung von Universalslaves durch Multi-Produktslaves werden Slavemengen beispielsweise in einer nach ihren Mächtigkeiten geordneten Reihenfolge durch zu ihren jeweiligen Profilmengen korrespondierende Multi-Produktslaves ersetzt. Dadurch kann die automatische Ersetzung nacheinander für Slavemengen mit unterschiedlichen Anzahlen von Universalslaves durchgeführt werden (einschließlich Slavemengen mit einem Universalslave, d. h. einzelnen Universalslaves). Ferner kann durch die Wahl einer Reihenfolge nach aufsteigenden oder absteigenden Mächtigkeiten der Slavemengen eine Präferenz für einzelne Universalslaves oder Multi-Produktslaves sowie für Multi-Produktslaves mit vielen oder wenigen internen Produktslaves gesetzt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Feldbussystem und ein Engineering-system für dessen Projektierung,
- FIG 2: schematisch ein erstes Ausführungsbeispiel zum Ersetzen eines Universalslave durch einen Produktslave,
- FIG 3: schematisch ein zweites Ausführungsbeispiel zum Er-setzen eines Universalslave durch einen Produktslave,
- FIG 4: schematisch ein drittes Ausführungsbeispiel zum Ersetzen eines Universalslave durch eine Produktslave,
- FIG 5: schematisch eine Ersetzung mehrerer Universalslaves durch Multi-Produktslaves,
- FIG 6: zueinander alternative Ersetzungen mehrerer Universalslaves durch Multi-Produktslaves, und
- FIG 7: schematisch einen Zuordnungsdialog zum Ersetzen mehrerer Universalslaves durch Multi-Produktslaves.

Einander entsprechende Teile sind in allen Figuren mit den gleichen Bezugszeichen versehen.

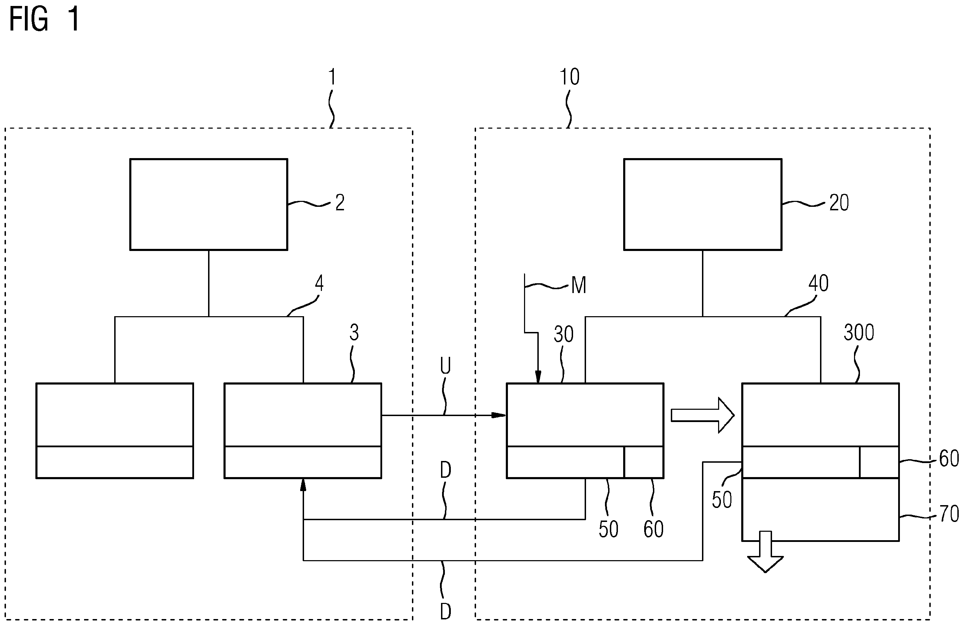

FIG 1 zeigt schematisch ein Feldbussystem 1 und ein Engineeringsystem 10 für eine computergestützte Projektierung des Feldbussystems 1.

Das Feldbussystem 1 weist einen Feldbusmaster 2, Feldgeräte 3 und einen den Feldbusmaster 2 und die Feldgeräte 3 verbindenden Feldbus 4 auf.

In dem Engineeringsystem 10 werden den Komponenten des Feldbussystems 1 entsprechende Objekte angelegt und projektiert. Für den Feldbusmaster 2 wird ein Feldbusmasterobjekt 20 angelegt und projektiert, für den Feldbus 4 wird ein Feldbusobjekt 40 angelegt und projektiert und für jedes Feldgerät 3 wird ein Feldgerätobjekt angelegt, das zunächst als ein Universalslave 30 mit einem Slaveprofil 50 und einer eindeutigen Feldbusadresse 60 projektiert wird.

Das Slaveprofil 50 eines Universalslave 30 enthält nur die von dem Feldbusmaster 2 für die Steuerung der Kommunikation über den Feldbus 4 benötigten Eigenschaften des zugehörigen Feldgerätes 3, beispielsweise die Anzahl und Art der Ein- und Ausgänge, über die das Feldgerät 3 Daten über den Feldbus 4 empfängt und sendet. Das Slaveprofil 50 eines Universalslave 30 wird beispielsweise durch einen so genannten Upload U aus von dem Feldbusmaster 2 ausgelesenen Profilinformationen des zugehörigen Feldgerätes 3 oder durch eine so genannte Migration M oder einen Import des Slaveprofils 50 aus einer verfügbaren früheren Projektierung erzeugt.

Erfindungsgemäß wird bei der Projektierung wenigstens einer der Universalslaves 30 durch einen zu seinem Slaveprofil 50 korrespondierenden Produktslave 300 unter Beibehaltung der Feldbusadresse 60 des Universalslave 30 ersetzt. Ein Produktslave 300 wird dabei als zu einem Slaveprofil 50 korrespondierend bezeichnet, wenn er alle Eigenschaften dieses Slaveprofils 50 aufweist und diese Eigenschaften um produktspezifische Zusatzdaten 70 erweitert. Derartige Zusatzdaten 70 erzeugen im Engineeringsystem 10 Mehrwertfunktionen. Diese sind beispielsweise:
- eine Darstellung eines konkreten Anlagenaufbaus im Engineeringsystem 10 und/oder
- eine Anzeige nicht-technischer oder für die Projektierung nicht relevanter Produktinformationen wie beispielsweise eines Preises, einer Gehäusefarbe oder einer Bestellnummer und/oder
- eine Verknüpfung mit einem Katalog- und Bestellsystem und/oder
- ein Foto oder eine fotorealistische Darstellung und/oder
- eine verbesserte Parametrierung, da Parameterdaten auf konkrete Technologieeigenschaften abgebildet werden können.

Nach Fertigstellung der Projektierung wird die gesamte resultierende Konfiguration durch einen so genannten Download D auf das Feldbussystem 1 geladen. Im Zuge dessen werden die projektierten Slaveprofile 50 dem Feldbusmaster 2 übermittelt.

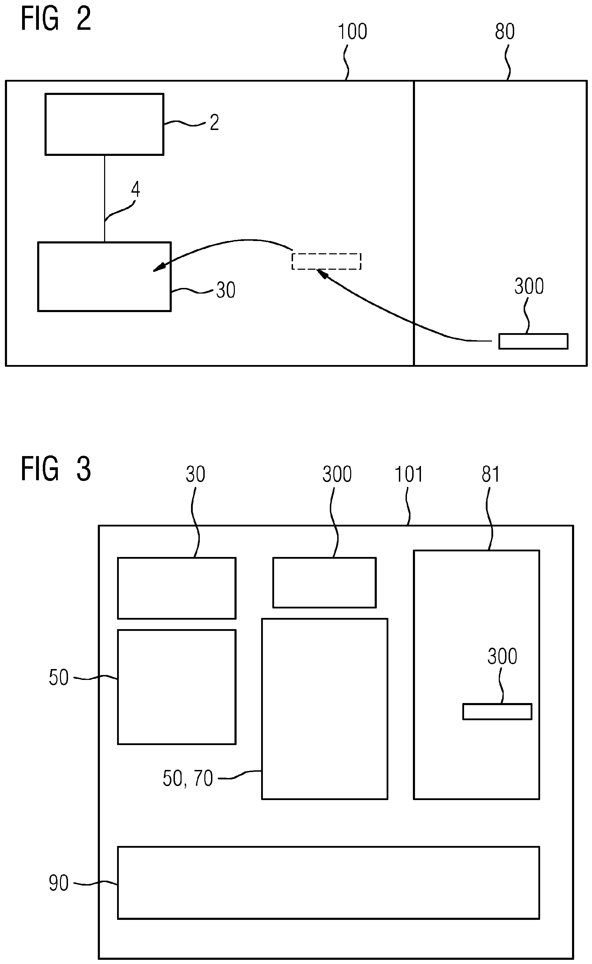

FIG 2 zeigt ein erstes Ausführungsbeispiel zum Ersetzen eines Universalslave 30 durch einen Produktslave 300. Dargestellt ist schematisch und beispielhaft eine erste grafische Benutzeroberfläche 100 eines Engineeringsystems 10, mittels derer ein Projekteur das erste Ausführungsbeispiel durchführt. Die erste grafische Benutzeroberfläche 100 stellt einen Produktkatalog 80, der als eine Produktdatenbank für Produktslaves 300 ausgebildet ist, den durch einen Produktslave 300 zu ersetzenden Universalslave 30, den Feldbusmaster 2 und den Feldbus 4 grafisch dar.

Der Projekteur wählt aus dem Produktkatalog 80 einen Produktslave 300 aus, beispielsweise indem er ihn mit einer Computermaus markiert. Im Anschluss schiebt er den markierten Produktslave 300 bei gedrückter Maustaste der Computermaus auf die Darstellung des Universalslave 30 wie in Figur 2 durch Pfeile angedeutet ist. Dann lässt er die Maustaste los.

Das Engineeringsystem 10 prüft anhand von Prüfkriterien, ob sich der Universalslave 30 durch den ausgewählten Produktslave 300 ersetzen lässt. Derartige Prüfkriterien sind beispielsweise:
- Ist der ausgewählte Produktslave 300 für dasselbe Feldbussystem 1 wie der Universalslave 30 bestimmt?
- Stimmt der Grundtyp des Universalslave 30 (z. B. Standard-Universalslave oder Sicherheits-Universalslave) mit dem des ausgewählten Produktslave 300 überein?
- Korrespondiert der ausgewählte Produktslave 300 zu dem Slaveprofil 50 des Universalslave 30?

Gegebenenfalls können weitere Prüfkriterien vorgegeben werden.

Wenn das Ergebnis der Prüfung positiv ist, wird der Universalslave 30 durch den ausgewählten Produktslave 300 ersetzt. Andernfalls wird die Anwenderaktion abgebrochen und beispielsweise eine entsprechende Fehlermeldung ausgegeben.

FIG 3 zeigt ein zweites Ausführungsbeispiel zum Ersetzen eines Universalslave 30 durch einen Produktslave 300. Dargestellt ist schematisch und beispielhaft eine zweite grafische Benutzeroberfläche 101 eines Engineeringsystems 10, mittels derer ein Projekteur das zweite Ausführungsbeispiel durchführt.

Der Projekteur wählt einen durch einen Produktslave 300 zu ersetzenden Universalslave 30 aus. Anschließend ruft der Projekteur eine Funktion des Engineeringsystems 10 auf, die aus dem Produktkatalog 80 automatisch eine Auswahlmenge 81 von zu dem Slaveprofil 50 des ausgewählten Universalslave 30 korrespondierenden Produktslaves 300 des Feldbussystems 1 des Universalslave 30 ermittelt.

Daraufhin wird vom System mittels der zweiten grafischen Benutzeroberfläche 101 ein Dialog aufgeblendet, in dem mindestens der ausgewählte zu ersetzende Universalslave 30 und dessen Slaveprofil 50 sowie die Produktslaves 300 der ermittelten Auswahlmenge 81 dargestellt werden.

Der Projekteur wählt aus der ermittelten Auswahlmenge 81 einen Produktslave 300 aus. Der ausgewählte Produktslave 300 sowie dessen Eigenschaften, d. h. die Eigenschaften des Slaveprofils 50 und die Zusatzdaten 70, werden auf der zweiten grafischen Benutzeroberfläche 101 dargestellt, so dass der Projekteur sie einsehen und überprüfen kann. Der Projekteur kann die Auswahl des Produktslave 300 bestätigen, woraufhin der Universalslave 30 durch den ausgewählten Produktslave 300 ersetzt wird.

In dem durch die zweite grafische Benutzeroberfläche 101 verfügbaren Dialog können optional in einem Kommentarfenster 90 zur Unterstützung des Projekteurs weitere Informationen, beispielsweise zur Kompatibilität des Universalslave 30 und des ausgewählten Produktslave 300, dargestellt werden.

Das anhand der Figur 3 beschriebene zweite Ausführungsbeispiel kann sowohl für einen Universalslave 30 als auch für mehrere Universalslaves 30 gleichen Slaveprofils 50 ausführbar sein.

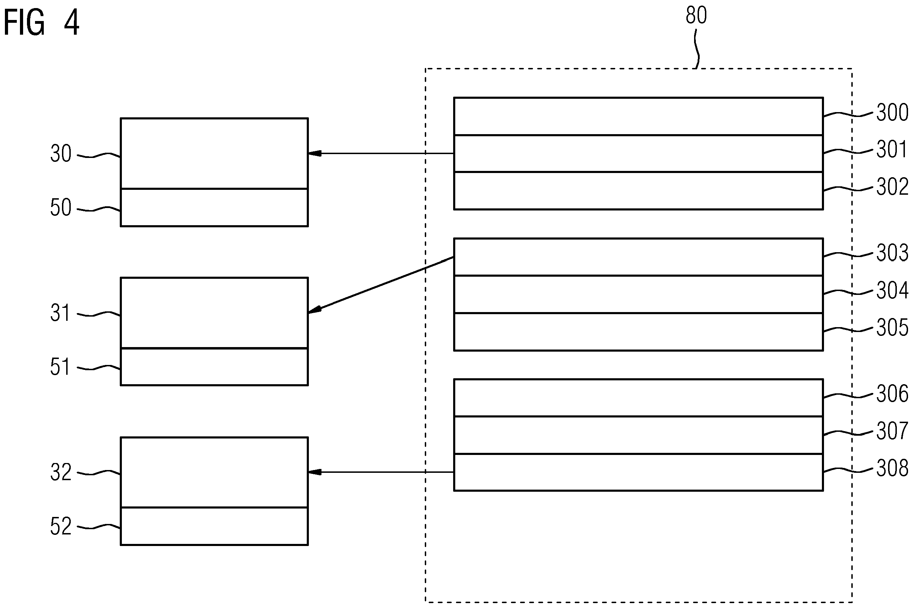

FIG 4 zeigt ein drittes Ausführungsbeispiel zum Ersetzen eines Universalslave 30 durch einen Produktslave 300. Dieses Ausführungsbeispiel zielt auf eine automatische Ersetzung aller Universalslaves 30 mit demselben Slaveprofil 50 durch einen Produktslave 300.

Bei einer derartigen automatischen Ersetzung besteht das Problem, dass es in der Regel zu einem Slaveprofil 50, welches ein Universalslave 30 hat, mehrere Produkslaves 300 mit diesem Slaveprofil 50 gibt. Eine eindeutige Zuordnung eines Produktslave 300 zu einem Slaveprofil 50 ist daher nicht ohne weiteres möglich. Um eine solche Zuordnung dennoch herzustellen, stellt das Engineeringsystem 10 eine Methode zur Verfügung, mit der pro Slaveprofil 50 ein bevorzugter Produktslave 300 festgelegt werden kann. Figur 4 zeigt schematisch die Wirkungsweise dieser Methode: von ersten Produktslaves 300, 301, 302, die jeweils ein erstes Slaveprofil 50 aufweisen, wird genau ein erster Produktslave 301 dem ersten Slaveprofil 50 zugeordnet, von zweiten Produktslaves 303, 304, 305, die jeweils ein zweites Slaveprofil 51 aufweisen, wird genau ein zweiter Produktslave 303 dem zweiten Slaveprofil 51 zugeordnet und von dritten Produktslaves 306, 307, 308, die jeweils ein drittes Slaveprofil 52 aufweisen, wird genau ein dritter Produktslave 308 dem dritten Slaveprofil 52 zugeordnet. Der Projekteur initiiert das automatische Ersetzen von Universalslaves 30 bis 32 durch Produktslaves 301 bis 308 durch Betätigen einer entsprechenden ausführbaren Aktion im Engineeringsystem 10. Im in Figur 4 dargestellten Beispiel werden dadurch alle Universalslaves 30 mit dem ersten Slaveprofil 50 durch den ausgewählten ersten Produktslave 301, alle Universalslaves 31 mit dem zweiten Slaveprofil 51 durch den ausgewählten zweiten Produktslave 303 und alle Universalslaves 32 mit dem dritten Slaveprofil 52 durch den ausgewählten dritten Produktslave 308 ersetzt.

Konkret kann eine Methode zur Zuordnung von Produktslaves 301 bis 308 zu Slaveprofilen 50 bis 52 beispielsweise auf eine der folgende Weisen umgesetzt werden:
- Es wird ein Produktslave 301 bis 308 im Produktkatalog 80 ausgewählt. Anschließend wird eine Funktion des Engineeringsystems 10 ausgeführt, die den ausgewählten Produktslave 301 bis 308 seinem jeweiligen Slaveprofil 50 bis 52 zuordnet und alle Universalslaves 30 bis 32 mit diesem Slaveprofil 50 bis 52 durch den ausgewählten Produktslave 301 bis 308 ersetzt. Das Engineeringsystem 10 prüft dabei, dass jedem Slaveprofil 50 bis 52 höchstens ein Produktslave 301 bis 308 zugeordnet wird.
- Das Engineeringsystem 10 stellt einen Dialog zur Verfügung, in dem Slaveprofile 50 bis 52 und Produktslaves 301 bis 308 aufgelistet werden. Der Projekteur kann nun jedem aufgelisteten Slaveprofil 50 bis 52 maximal einen aufgelisteten korrespondierenden Produktslave 301 bis 308 zuordnen.

Alternativ oder zusätzlich kann im Engineeringsystem 10 ferner eine Vorfestlegung einer Zuordnung von Produktslaves 301 bis 308 zu Slaveprofilen 50 bis 52 vorgegeben werden, z. B. wenn firmenseitig Einkaufsrichtlinien gelten. Die Zuordnung von Produktslaves 301 bis 308 zu Slaveprofilen 50 bis 52 ist in jedem Fall vorzugsweise jederzeit änderbar.

Entscheidend ist, dass der Anwender beim automatischen Ersetzen von Universalslaves 30 bis 32 durch Produktslaves 301 bis 308 keine Auswahl von Produktslaves 301 bis 308 mehr treffen muss, da diese Auswahl automatisch vom Engineeringsystem 10 anhand der Zuordnung von Produktslaves 301 bis 308 zu Slaveprofilen 50 bis 52 erfolgt.

Die beschriebene Zuordnung von Produktslaves 301 bis 308 zu Slaveprofilen 50 bis 52 und/oder automatische Ersetzung von Universalslaves 30 bis 32 durch Produktslaves 301 bis 308 ist vorzugsweise durchführbar für:
- alle Slaveprofile 50 bis 52 und/oder alle Universalslaves 30 bis 32 einer Projektierung oder
- eine selektierte Gruppe von Slaveprofilen 50 bis 52 und/oder eine selektierte Gruppe von Universalslaves 30 bis 32 oder
- ein selektiertes Slaveprofil 50 bis 52 und/oder einen selektierten Universalslave 30 bis 32.

Wird vom System zu einem bestimmten Universalslave 30 bis 32 kein seinem Slaveprofil 50 bis 52 zugeordneter Produktslave 301 bis 308 gefunden (weil z. B. der Projekteur diesem Slaveprofil 50 bis 52 keinen Produktslave 301 bis 308 zugeordnet hat), so wird dieser Universalslave 30 bis 32 bei der automatischen Ersetzung von Universalslaves 30 bis 32 durch Produktslaves 301 bis 308 übersprungen und die Ersetzung für die restlichen Universalslaves 30 bis 32 fortgeführt.

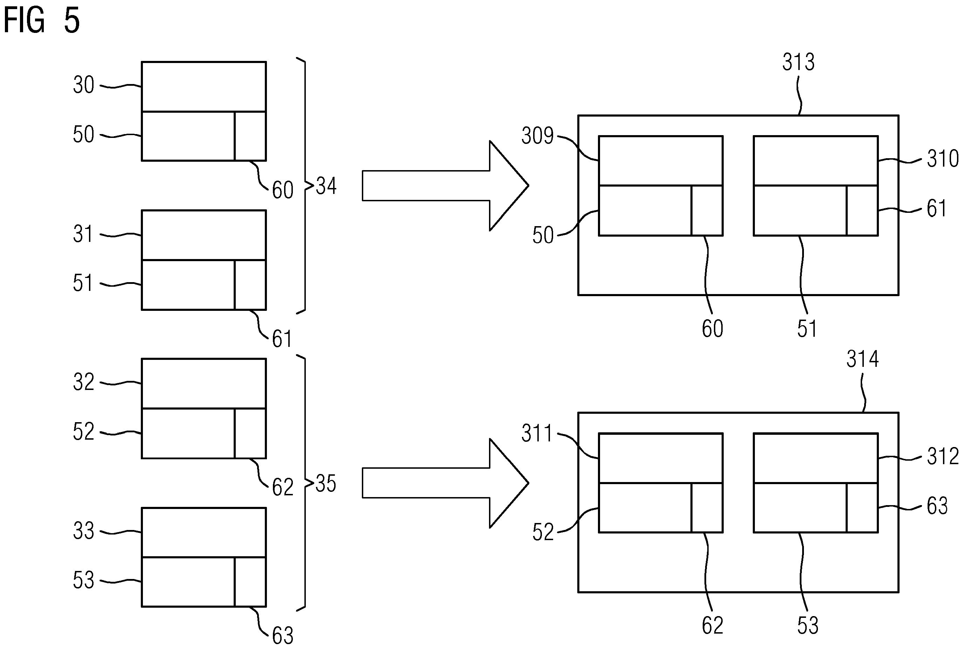

FIG 5 zeigt schematisch die Ersetzung zweier Slavemengen 34, 35, die jeweils mehrere Universalslaves 30 bis 33 enthalten, durch jeweils einen Multi-Produktslave 313, 314. Ein Multi-Produktslave 313, 314 besteht aus mehreren internen Produktslaves 309 bis 312 und hat einen selektierbaren Eintrag in dem Produktkatalog 80. Für den Feldbusmaster 2 sind jedoch nur die internen Produktslaves 309 bis 312 eines Multi-Produktslave 313, 314 sichtbar, mit denen er über den Feldbus 4 kommuniziert und die bei der Projektierung jeweils eine Feldbusadresse 60 bis 63 erhalten. In Figur 5 sind beispielhaft nur Multi-Produktslaves 313, 314 mit jeweils zwei internen Produktslaves 309 bis 312 dargestellt. Es kann jedoch auch Multi-Produktslave 313, 314 mit mehr als zwei internen Produktslaves 309 bis 312 geben.

Bei der Ersetzung einer Slavemenge 34, 35 durch einen Multi-Produktslave 313, 314 wird jeder Universalslave 30 bis 33 der Slavemenge 34, 35 durch einen zu seinem jeweiligen Slaveprofil 50 bis 53 korrespondierenden internen Produktslave 309 bis 312 des die Slavemenge 34, 35 ersetzenden Multi-Produktslave 313, 314 ersetzt, so dass jeder interne Produktslave 309 bis 312 des Multi-Produktslave 313, 314 einen Universalslave 30 bis 33 der Slavemenge 34, 35 ersetzt. Jeder interne Produktslave 309 bis 312 erhält dabei die Feldbusadresse 60 bis 63 desjenigen Universalslave 30 bis 33, den er ersetzt.

Um eine Slavemenge 34, 35 durch einen Multi-Produktslave 313, 314 ersetzen zu können, muss der Produktkatalog 80 also wenigstens einen Multi-Produktslave 313, 314 enthalten, der zu einer Profilmenge korrespondiert, die aus den Slaveprofilen 50 bis 53 der Universalslaves 30 bis 33 der Slavemenge 34, 35 gebildet wird, d. h. wenigstens einen Multi-Produktslave 313, 314, der zu den Slaveprofilen 50 bis 53 dieser Profilmenge korrespondierende interne Produktslaves 309 bis 312 aufweist.

Die Ersetzung einer Slavemenge 34, 35 durch einen Multi-Produktslave 313, 314 wird beispielsweise analog zu der anhand von Figur 3 beschriebenen Ersetzung eines einzelnen Universalslave 30 durch einen Produktslave 300 durchgeführt, wobei der Projekteur statt des einzelnen Universalslave 30 eine Slavemenge 34, 35 auswählt, aus dem Produktkatalog 80 automatisch eine Auswahlmenge 81 von zu der Profilmenge der ausgewählten Slavemenge 34, 35 korrespondierenden Multi-Produktslaves 313, 314 ermittelt wird und der Projekteur einen Multi-Produktslave 313, 314 dieser Auswahlmenge 81 auswählt.

Alternativ oder zusätzlich wird eine automatische Ersetzung von Slavemengen 34, 35 durch Multi-Produktslaves 313, 314 durchgeführt, die analog zu der anhand von Figur 4 beschriebenen automatischen Ersetzung einzelner Universalslaves 30 bis 32 durch jeweils einen Produktslave 300 bis 308 ausgeführt wird. Dabei wird wenigstens einer Profilmenge von Slaveprofilen 50 bis 53 genau ein zu der Profilmenge korrespondierender Multi-Produktslave 313, 314 zugeordnet und wenigstens eine Slavemenge 34, 35, deren Profilmenge dadurch ein Multi-Produktslave 313, 314 zugeordnet ist, automatisch durch den ihrer Profilmenge zugeordneten Multi-Produktslave 313, 314 ersetzt. Slavemengen 34, 35 werden beispielsweise in einer nach ihren Mächtigkeiten geordneten Reihenfolge durch zu ihren jeweiligen Profilmengen korrespondierende Produktslaves 300 bis 308 oder Multi-Produktslaves 313, 314 ersetzt, d. h. es werden beispielsweise zunächst einzelne Universalslaves 30 bis 33 und danach Slavemengen 34, 35 mit zwei oder mehr Universalslaves 30 bis 33 in nach der Anzahl ihrer Elemente aufsteigend geordneter Reihenfolge durch Produktslaves 300 bis 308 bzw. Multi-Produktslaves 313, 314 ersetzt, soweit korrespondierende Produktslaves 300 bis 308 oder Multi-Produktslaves 313, 314 existieren und zu ersetzende Universalslaves 30 bis 33 verbleiben, oder es werden zunächst Slavemengen 34, 35 mit mehreren Universalslaves 30 bis 33 und erst danach verbliebene einzelne Universalslaves 30 bis 33 ersetzt.

Bei der vorgenannten automatischen Ersetzung von Slavemengen 34, 35 durch Multi-Produktslaves 313, 314 kann jedoch ein Ambiguitätsproblem auftreten. Es kann nämlich der Fall auftreten, dass ein Multi-Produktslave 313, 314 einer Profilmenge zugeordnet wird, zu der sich verschiedene Slavemengen 34, 35 bilden lassen, so dass eine Auswahlmethode zur Auswahl wenigstens einer dieser Slavemengen 34, 35 benötigt wird, die durch den Multi-Produktslave 313, 314 ersetzt werden soll.

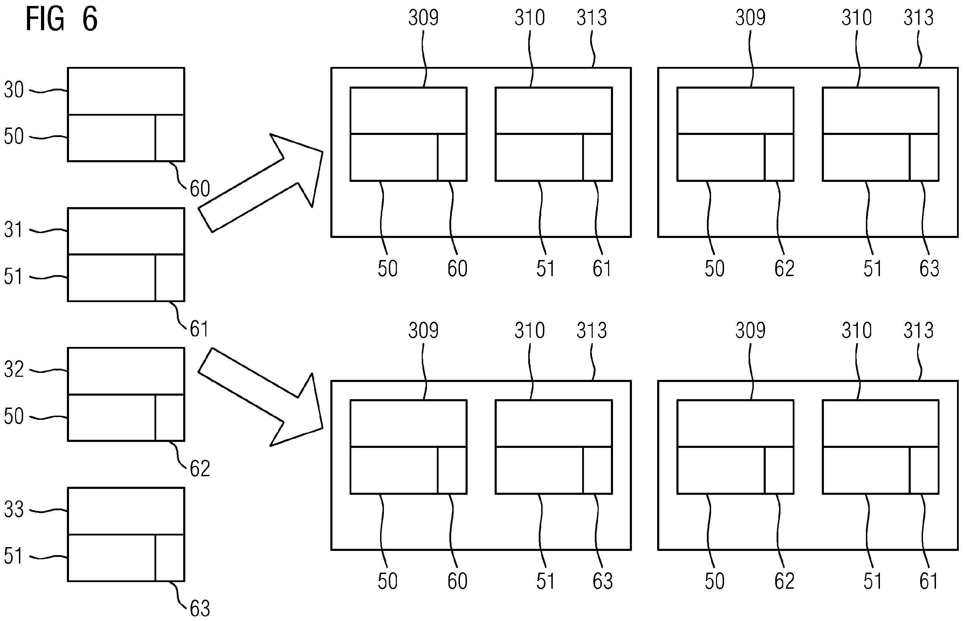

FIG 6 illustriert dieses Ambiguitätsproblem an einem einfachen Beispiel von vier Universalslaves 30 bis 33, von denen ein erster Universalslave 30 und ein dritter Universalslave 32 jeweils ein erstes Slaveprofil 50 und ein zweiter Universalslave 31 und der vierte Universalslave 33 jeweils ein von dem ersten Slaveprofil 50 abweichendes zweites Slaveprofil 51 haben. Der aus den beiden Slaveprofilen 50, 51 gebildeten Profilmenge ist ein Multi-Produktslave 313 zugeordnet, der aus einem ersten internen Produktslave 309 mit dem ersten Slaveprofil 50 und einem zweiten internen Produktslave 310 mit dem zweiten Slaveprofil 51 besteht.

In diesem Fall können aus den vier Universalslaves 30 bis 33 vier verschiedene Slavemengen 34, 35 mit derjenigen Profilmenge, der der Multi-Produktslave 313 zugeordnet ist, gebildet werden. Aus diesen vier verschiedenen Slavemengen 34, 35 können zwei Kombinationen zweier disjunkter Slavemengen 34, 35 gebildet werden. Eine erste dieser Kombinationen besteht aus einer ersten Slavemenge 34, 35, die aus dem ersten Universalslave 30 und dem zweiten Universalslave 31 besteht, und einer zweiten Slavemenge 34, 35, die aus dem dritten Universalslave 32 und dem vierten Universalslave 33 besteht. Die zweite Kombination besteht aus einer ersten Slavemenge 34, 35, die aus dem ersten Universalslave 30 und dem vierten Universalslave 33 besteht, und einer zweiten Slavemenge 34, 35, die aus dem dritten Universalslave 32 und dem zweiten Universalslave 31 besteht.

Jede dieser beiden Kombinationen kann dazu verwendet werden, die beiden Slavemengen 34, 35 der jeweiligen Kombination jeweils durch den Multi-Produktslave 313 zu ersetzen. Die sich durch die Ersetzungen ergebenden Projektierungen unterscheiden sich voneinander hinsichtlich der Verteilung der Feldbusadressen 60 bis 63 auf die internen Produktslaves 309 der projektierten Versionen des Multi-Produktslave 313. In FIG 6 entspricht die oben dargestellte Verteilung der ersten Kombination disjunkter Slavemengen 34, 35 und die unten dargestellte Verteilung der zweiten Kombination disjunkter Slavemengen 34, 35.

Entsprechend führt die Existenz verschiedener Slavemengen 34, 35 mit einer übereinstimmenden Profilmenge immer zu der Existenz unterschiedlicher Kombinationen paarweise disjunkter Slavemengen 34, 35 mit dieser Profilmenge und zu einer entsprechend unterschiedlichen Verteilung von Feldbusadressen 60 bis 63 auf die projektierten Versionen eines der Profilmenge zugeordneten Multi-Produktslave 313. Dies wird verwendet, um das oben genannte Ambiguitätsproblem zu lösen, indem eine dieser Kombinationen ausgewählt wird und jede Slavemenge 34, 35 dieser Kombination automatisch durch den der jeweiligen Profilmenge zugeordneten Multi-Produktslave 313 ersetzt wird.

Zur Auswahl derartiger Kombinationen können verschiedene Methoden verwendet werden. Beispielsweise werden die Kombinationen automatisch anhand der Feldbusadressen 60 bis 63 der Universalslaves 30 bis 33 nach einer vorgegebenen Regel ausgewählt. Beispielsweise werden immer Universalslaves 30 bis 33 zu einer Slavemenge 34, 35 zusammengefasst, deren Feldbusadressen 60 bis 63 möglichst nahe beieinander liegen.

Alternativ oder zusätzlich zu einer automatischen Auswahl wird zur Auswahl von Kombinationen ein Zuordnungsdialog eingesetzt. Auch für derartige Zuordnungsdialoge gibt es unterschiedliche Alternativen.

Ein erster derartiger Zuordnungsdialog sieht vor, dass für eine ausgewählte Profilmenge oder für einen einer Profilmenge zugeordneten ausgewählten Multi-Produktslave 313 die verschiedenen möglichen Kombinationen disjunkter Slavemengen 34, 35 der jeweiligen Profilmenge angezeigt und auswählbar gemacht werden, so dass von dem Projekteur eine dieser Kombinationen ausgewählt werden kann.

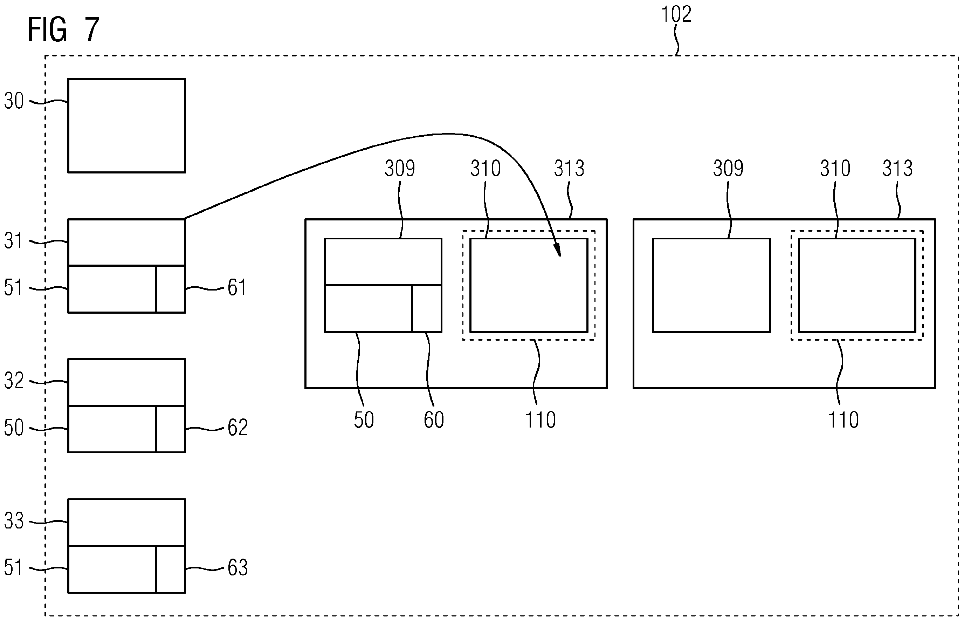

FIG 7 zeigt einen zweiten Zuordnungsdialog, der mittels einer dritten grafischen Benutzeroberfläche 102 eines Engineeringsystems 10 dargestellt wird. Das in FIG 7 dargestellte Beispiel bezieht sich auf die Universalslaves 30 bis 33 und den Multi-Produktslave 313, die auch in FIG 6 dargestellt sind. Bei dem in FIG 7 dargestellten Zuordnungsdialog werden für eine ausgewählte Profilmenge oder einen einer Profilmenge zugeordneten ausgewählten Multi-Produktslave 313 eine Liste aller Universalslaves 30 bis 33 mit einem Slaveprofil 50, 51 aus der jeweiligen Profilmenge sowie eine oder mehrere Kopien des der Profilmenge zugeordneten Multi-Produktslave 313 dargestellt.

Dabei stimmt die Anzahl der dargestellten Kopien des Multi-Produktslave 313 mit der Anzahl paarweise disjunkter Slavemengen 34, 35 überein, die jeweils die Profilmenge, der der Multi-Produktslave 313 zugeordnet ist, aufweisen und aus den Universalslaves 30 bis 33 gebildet werden können.

Die internen Produktslaves 309, 310 der Kopien des Multi-Produktslave 313 sind zunächst als leere Schablonen dargestellt und werden von dem Projekteur nacheinander gefüllt. Dazu zieht der Projekteur beispielsweise mit einer Computermaus wie durch den Pfeil in FIG 7 angedeutet nacheinander jeweils einen der Universalslaves 30 bis 33 auf eine der leeren Schablonen und ordnet dem zugehörigen internen Produktslave 309, 310 dadurch die Feldbusadresse 60 bis 63 des jeweiligen Universalslave 30 bis 33 zu. Die für einen Universalslave 30 bis 33 verfügbaren leeren Schablonen von internen Produktslaves 309, 310, die zu dem Slaveprofil 50, 51 des Universalslave 30 bis 33 korrespondieren, werden kenntlich gemacht, beispielsweise durch einen in FIG 7 gestrichelt angedeuteten Kennzeichnungsrahmen 110.

Ein Engineeringsystems 10 kann auch derart ausgeführt werden, dass die anhand der Figuren 4 bis 7 beschriebenen Ausführungsbeispiele zur automatischen Ersetzung von einzelnen Universalslaves 30 bis 33 durch Produktslaves 300 bis 308 und/oder von Slavemengen 34, 35 durch Multi-Produktslaves 313, 314 nicht oder nicht nur als explizite Anwenderaktionen gestartet werden können, sondern alternativ oder zusätzlich automatisch z. B. nach einem erfolgten Upload U oder nach einer Migration M.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Projektieren eines Feldbussystems (1) mit einem Feldbusmaster (2) und wenigstens einem Feldgerät (3), mit folgenden Schritten:
- Erzeugen eines Feldbusmasterobjekts (20) in einem Engineeringsystem (10), das den Feldbusmaster des zu projektierenden Feldbussystems nachbildet;
- Erzeugen eines Feldbusobjekts (40) im Engineeringsystem, das einen Feldbus (4) des zu projektierenden Feldbussystems nachbildet;
- Erzeugen mindestens eines Feldgeräteobjektes im Engineeringsystem, welches das wenigstens eine Feldgerät (3) nachbildet, wobei jedes Feldgeräteobjekt zunächst als ein Universalslave (30 bis 33) mit einem Slaveprofil (50 bis 53) und einer eindeutigen Feldbusadresse (60 bis 63) projektiert wird, wobei das Slaveprofil die von dem Feldbusmaster für die Steuerung der Kommunikation über den Feldbus benötigten Eigenschaften des durch das Feldgeräteobjekt nachgebildeten Feldgerätes (3) enthält, insbesondere die Anzahl und Art der Ein- und Ausgänge, über die das Feldgerät (3) Daten über den Feldbus (4) empfängt und sendet,
- Erzeugen zumindest eines projektierten Slaveprofils mittels Ersetzen des Universalslave (30 bis 33) durch einen zu seinem Slaveprofil (50 bis 53) korrespondierenden Produktslave (300 bis 312) aus einem in einem Datenspeicher abgelegten Produktkatalog (80) unter Beibehaltung der Feldbusadresse (60 bis 63) des Universalslave (30 bis 33), wobei ein Produktslave (300 bis 312) mit einem Slaveprofil (50 bis 53) korrespondiert, wenn der Produktslave alle Eigenschaften dieses Slaveprofils (50 bis 53) aufweist und diese Eigenschaften um Zusatzdaten (70) erweitert,
- Übertragen des zumindest einen projektierten Slaveprofils an den Feldbusmaster.

2. Verfahren nach Anspruch 1,
**dadurch gekennzeichnet, dass** wenigstens ein Prüfkriterium für eine Ersetzbarkeit eines Universalslave (30 bis 33) durch einen Produktslave (300 bis 312) definiert wird, die Ersetzbarkeit eines Universalslave (30 bis 33) durch einen als Ersatz für den Universalslave (30 bis 33) vorgesehenen Produktslave (300 bis 312) automatisch anhand des wenigstens einen Prüfkriteriums geprüft wird und der Universalslave (30 bis 33) durch diesen Produktslave (300 bis 312) nur dann ersetzt wird, wenn das Ergebnis der Prüfung auf Ersetzbarkeit positiv ist.

3. Verfahren nach Anspruch 2,
**dadurch gekennzeichnet, dass** als wenigstens ein Prüfkriterium definiert wird, dass der Produktslave (300 bis 312) zu dem Slaveprofil (50 bis 53) des Universalslave (30 bis 33) korrespondiert oder für dasselbe Feldbussystem (1) wie der Universalslave (30 bis 33) bestimmt ist oder ein Grundtyp des Produktslave (300 bis 312) und des Universalslave (30 bis 33) übereinstimmt.

4. Verfahren nach Anspruch 2 oder 3,
**dadurch gekennzeichnet, dass** zum Ersetzen eines Universalslave (30 bis 33) ein Produktslave (300 bis 312) manuell aus dem Produktkatalog (80) ausgewählt wird.

5. Verfahren nach einem der vorhergehenden Ansprüche, **dadurch gekennzeichnet, dass** ein durch einen Produktslave (300 bis 312) zu ersetzender Universalslave (30 bis 33) ausgewählt wird, aus dem Produktkatalog (80) automatisch eine Auswahlmenge (81) von zu dem Slaveprofil (50 bis 53) des ausgewählten Universalslave (30 bis 33) korrespondierenden Produktslaves (300 bis 312) ermittelt wird, und der ausgewählte Universalslave (30 bis 33) durch einen Produktslave (300 bis 312) der Auswahlmenge (81) ersetzt wird.

6. Verfahren nach einem der vorhergehenden Ansprüche, **dadurch gekennzeichnet, dass** wenigstens einem Slaveprofil (50 bis 53) genau ein zu dem Slaveprofil (50 bis 53) korrespondierender Produktslave (300 bis 312) zugeordnet wird, und jeder Universalslave (30 bis 33), dessen Slaveprofil (50 bis 53) dadurch ein Produktslave (300 bis 312) zugeordnet ist, automatisch durch den seinem Slaveprofil (50 bis 53) zugeordneten Produktslave (300 bis 312) ersetzt wird.

7. Verfahren nach einem der vorhergehenden Ansprüche, **dadurch gekennzeichnet, dass** wenigstens eine Slavemenge (34, 35) mehrerer Universalslaves (30 bis 33) durch einen Multi-Produktslave (313, 314), der aus mehreren internen Produktslaves (309 bis 312) besteht, ersetzt wird, so dass jeder Universalslave (30 bis 33) der Slavemenge (34, 35) durch einen zu seinem Slaveprofil (50 bis 53) korrespondierenden internen Produktslave (309 bis 312) des Multi-Produktslave (313, 314) ersetzt wird und jeder interne Produktslave (309 bis 312) des Multi-Produktslave (313, 314) einen Universalslave (30 bis 33) der Slavemenge (34, 35) ersetzt.

8. Verfahren nach Anspruch 7,
**dadurch gekennzeichnet, dass** eine Slavemenge (34, 35) mehrerer jeweils durch einen Produktslave (300 bis 312) zu ersetzender Universalslaves (30 bis 33) ausgewählt wird, aus dem Produktkatalog (80) automatisch eine Auswahlmenge (81) von Multi-Produktslaves (313, 314), die jeweils die ausgewählte Slavemenge (34, 35) ersetzen können, ermittelt wird und die ausgewählte Slavemenge (34, 35) durch einen Multi-Produktslave (313, 314) der Auswahlmenge (81) ersetzt wird.

9. Verfahren nach Anspruch 7 oder 8,
**dadurch gekennzeichnet, dass** wenigstens einer Profilmenge von Slaveprofilen (50 bis 53) genau ein zu der Profilmenge korrespondierender Multi-Produktslave (313, 314) zugeordnet wird, der zu den Slaveprofilen (50 bis 53) der Profilmenge korrespondierende interne Produktslaves (309 bis 312) aufweist, und dass wenigstens eine Slavemenge (34, 35), deren Profilmenge dadurch ein Multi-Produktslave (313, 314) zugeordnet ist, automatisch durch den ihrer Profilmenge zugeordneten Multi-Produktslave (313, 314) ersetzt wird.

10. Verfahren nach Anspruch 9,
**dadurch gekennzeichnet, dass** für einen Multi-Produktslave (313, 314), der einer Profilmenge zugeordnet wird, zu der sich verschiedene Slavemengen (34, 35) bilden lassen, aus diesen verschiedenen Slavemengen (34, 35) eine Kombination paarweise disjunkter Slavemengen (34, 35) ausgewählt wird, und jede Slavemenge (34, 35) dieser Kombination automatisch durch den Multi-Produktslave (313, 314) ersetzt wird.

11. Verfahren nach Anspruch 10,
**dadurch gekennzeichnet, dass** eine Kombination paarweise disjunkter Slavemengen (34, 35) automatisch anhand der Feldbusadressen (60 bis 63) der Universalslaves (30 bis 33) ausgewählt wird.

12. Verfahren nach Anspruch 10 oder 11,
**dadurch gekennzeichnet, dass** verschiedene mögliche Kombinationen paarweise disjunkter Slavemengen (34, 35) automatisch anhand der Feldbusadressen (60 bis 63) der Universalslaves (30 bis 33) ermittelt werden und eine dieser ermittelten Kombinationen manuell ausgewählt wird.

13. Verfahren nach einem der Ansprüche 10 bis 12,
**dadurch gekennzeichnet, dass** eine Liste aller Universalslaves (30 bis 33) mit einem Slaveprofil (50 bis 53) aus der Profilmenge, zu der der Multi-Produktslave (313, 314) korrespondiert, ermittelt wird und eine Kombination paarweise disjunkter Slavemengen (34, 35) manuell aus den Universalslaves (30 bis 33) der ermittelten Liste zusammengestellt wird, wobei automatisch überwacht wird, dass jede zusammengestellte Slavemenge (34, 35) die Profilmenge, zu der der Multi-Produktslave (313, 314) korrespondiert, aufweist und die zusammengestellten Slavemengen (34, 35) paarweise disjunkt sind.

14. Verfahren nach einem der Ansprüche 9 bis 13,
**dadurch gekennzeichnet, dass** Slavemengen (34, 35) in einer nach ihren Mächtigkeiten geordneten Reihenfolge durch zu ihren jeweiligen Profilmengen korrespondierende Multi-Produktslaves (313, 314) ersetzt werden.

15. Engineeringsystem (10) für eine Projektierung eines Feldbussystems (1), das folgendes aufweist:
- Mittel zum Erzeugen eines Feldbusmasterobjekts (20), das einen Feldbusmaster (2) des zu projektierenden Feldbussystems nachbildet;
- Mittel zum Erzeugen eines Feldbusobjekts (40), das einen Feldbus (4) des zu projektierenden Feldbussystems (1) nachbildet;
- Mittel zum Erzeugen mindestens eines Feldgeräteobjektes, das mindestens ein Feldgerät (3) des zu projektierenden Feldbussystems (1) nachbildet, wobei jedes Feldgeräteobjekt als Universalslave (30 bis 33) mit einem Slaveprofil (50 bis 53) und einer eindeutigen Feldbusadresse (60) projektiert wird, wobei das Slaveprofil die von dem Feldbusmaster für die Steuerung der Kommunikation über den Feldbus benötigten Eigenschaften des durch das Feldgeräteobjekt nachgebildeten Feldgerätes enthält, insbesondere die Anzahl und Art der Ein- und Ausgänge, über die das Feldgerät (3) Daten über den Feldbus (4) empfängt und sendet,
- Mittel zum Erzeugen zumindest eines projektierten Slaveprofils mittels Ersetzen des Universalslave durch einen zu seinem Slaveprofil korrespondierenden Produktslave (300 bis 312) aus einem in einem Datenspeicher abgelegten Produktkatalog (80) unter Beibehaltung der Feldbusadresse des Universalslave, wobei ein Produktslave mit einem Slaveprofil korrespondiert, wenn der Produktslave alle Eigenschaften dieses Slaveprofils aufweist und diese Eigenschaften um Zusatzdaten (70) erweitert,
- Mittel (D) zum Übertragen des projektierten Slaveprofils an den Feldbusmaster (2) des Feldbussystems (1).

16. Engineeringsystem nach Anspruch 15, dessen Mittel zum Erzeugen des mindestens einen Feldgeräteobjekts zusätzlich Mittel (U) zum Auslesen von Profilinformationen des Feldgerätes (3) aus dem Feldbusmaster (2) und Mittel zum Erzeugen des Slaveprofils (50) aus den ausgelesenen Profilinformationen aufweist.

17. Engineeringsystem nach Anspruch 16, dessen Mittel zum Erzeugen des mindestens einen Feldgeräteobjekts zusätzlich Mittel (M) für Migration oder Import des Slaveprofils (50) aus einer gespeicherten Projektierung aufweist.

## Claims

1. Method for planning a fieldbus system (1) having a fieldbus master (2) and at least one field device (3), comprising the following steps:
- generating a fieldbus master object (20) in an engineering system (10), which reproduces the fieldbus master of the fieldbus system to be planned;
- generating a fieldbus object (40) in the engineering system, which reproduces a fieldbus (4) of the fieldbus system to be planned;
- generating at least one field device object in the engineering system, which reproduces the at least one field device (3), wherein each field device object is first planned as a universal slave (30 to 33) having a slave profile (50 to 53) and a unique fieldbus address (60 to 63), wherein the slave profile contains the properties of the field device (3) reproduced by the field device object that are needed by the fieldbus master for controlling the communication via the fieldbus, in particular the number and type of inputs and outputs by way of which the field device (3) receives and sends data via the fieldbus (4),
- generating at least one planned slave profile by replacing the universal slave (30 to 33) with a product slave (300 to 312), corresponding to its slave profile (50 to 53), from a product catalogue (80) stored in a data memory while retaining the fieldbus address (60 to 63) of the universal slave (30 to 33), wherein a product slave (300 to 312) corresponds to a slave profile (50 to 53) if the product slave has all of the properties of this slave profile (50 to 53) and extends these properties by supplementary data (70),
- transferring the at least one planned slave profile to the fieldbus master.

2. Method according to Claim 1,
**characterized in that** at least one checking criterion for a replaceability of a universal slave (30 to 33) by a product slave (300 to 312) is defined, the replaceability of a universal slave (30 to 33) by a product slave (300 to 312) intended as a replacement for the universal slave (30 to 33) is automatically checked on the basis of the at least one checking criterion, and the universal slave (30 to 33) is replaced by this product slave (300 to 312) only if the result of the check for replaceability is positive.

3. Method according to Claim 2,
**characterized in that** the at least one checking criterion defined is that the product slave (300 to 312) corresponds to the slave profile (50 to 53) of the universal slave (30 to 33) or is intended for the same fieldbus system (1) as the universal slave (30 to 33), or a basic type of the product slave (300 to 312) and of the universal slave (30 to 33) tallies.

4. Method according to Claim 2 or 3,
**characterized in that** a product slave (300 to 312) is selected from the product catalogue (80) manually in order to replace a universal slave (30 to 33).

5. Method according to one of the preceding claims, **characterized in that** a universal slave (30 to 33) to be replaced by a product slave (300 to 312) is selected, a selection set (81) of product slaves (300 to 312) corresponding to the slave profile (50 to 53) of the selected universal slave (30 to 33) is ascertained from the product catalogue (80) automatically, and the selected universal slave (30 to 33) is replaced by a product slave (300 to 312) in the selection set (81).

6. Method according to one of the preceding claims, **characterized in that** at least one slave profile (50 to 53) is assigned precisely one product slave (300 to 312) corresponding to the slave profile (50 to 53), and each universal slave (30 to 33) whose slave profile (50 to 53) thus has an associated product slave (300 to 312) is replaced by the product slave (300 to 312) associated with its slave profile (50 to 53) automatically.

7. Method according to one of the preceding claims, **characterized in that** at least one slave set (34, 35) of multiple universal slaves (30 to 33) is replaced by a multiproduct slave (313, 314) that consists of multiple internal product slaves (309 to 312), with the result that each universal slave (30 to 33) in the slave set (34, 35) is replaced by an internal product slave (309 to 312), corresponding to its slave profile (50 to 53), of the multiproduct slave (313, 314) and each internal product slave (309 to 312) of the multiproduct slave (313, 314) replaces a universal slave (30 to 33) in the slave set (34, 35).

8. Method according to Claim 7,
**characterized in that** a slave set (34, 35) of multiple universal slaves (30 to 33) that are each to be replaced by a product slave (300 to 312) is selected, a selection set (81) of multiproduct slaves (313, 314) that can each replace the selected slave set (34, 35) is ascertained from the product catalogue (80) automatically, and the selected slave set (34, 35) is replaced by a multiproduct slave (313, 314) in the selection set (81).

9. Method according to Claim 7 or 8,
**characterized in that** at least one profile set of slave profiles (50 to 53) is assigned precisely one multiproduct slave (313, 314), corresponding to the profile set, that has internal product slaves (309 to 312) corresponding to the slave profiles (50 to 53) in the profile set, and **in that** at least one slave set (34, 35) whose profile set thus has an associated multiproduct slave (313, 314) is replaced by the multiproduct slave (313, 314) associated with its profile set automatically.

10. Method according to Claim 9,
**characterized in that**, for a multiproduct slave (313, 314) that is assigned to a profile set into which various slave sets (34, 35) can be formed, a combination of slave sets (34, 35) that are disjunct in pairs is selected from these various slave sets (34, 35), and each slave set (34, 35) in this combination is replaced by the multiproduct slave (313, 314) automatically.

11. Method according to Claim 10,
**characterized in that** a combination of slave sets (34, 35) that are disjunct in pairs is selected on the basis of the fieldbus addresses (60 to 63) of the universal slaves (30 to 33) automatically.

12. Method according to Claim 10 or 11,
**characterized in that** various possible combinations of slave sets (34, 35) that are disjunct in pairs are ascertained on the basis of the fieldbus addresses (60 to 63) of the universal slaves (30 to 33) automatically, and one of these ascertained combinations is selected manually.

13. Method according to one of Claims 10 to 12,
**characterized in that** a list of all universal slaves (30 to 33) having a slave profile (50 to 53) from the profile set to which the multiproduct slave (313, 314) corresponds is ascertained and a combination of slave sets (34, 35) that are disjunct in pairs is compiled from the universal slaves (30 to 33) on the ascertained list manually, there being automatic monitoring to determine that each compiled slave set (34, 35) has the profile set to which the multiproduct slave (313, 314) corresponds and the compiled slave sets (34, 35) are disjunct in pairs.

14. Method according to one of Claims 9 to 13,
**characterized in that** slave sets (34, 35) are replaced by multiproduct slaves (313, 314) corresponding to their respective profile sets in a sequence ordered according to their powers.

15. Engineering system (10) for planning a fieldbus system (1), comprising the following:
- means for generating a fieldbus master object (20), which reproduces a fieldbus master (2) of the fieldbus system to be planned;
- means for generating a fieldbus object (40), which reproduces a fieldbus (4) of the fieldbus system (1) to be planned;
- means for generating at least one field device object, which reproduces at least one field device (3) of the fieldbus system (1) to be planned, wherein each field device object is planned as a universal slave (30 to 33) having a slave profile (50 to 53) and a unique fieldbus address (60), wherein the slave profile contains the properties of the field device reproduced by the field device object that are needed by the fieldbus master for controlling the communication via the fieldbus, in particular the number and type of inputs and outputs by way of which the field device (3) receives and sends data via the fieldbus (4),
- means for generating at least one planned slave profile by replacing the universal slave with a product slave (300 to 312), corresponding to its slave profile, from a product catalogue (80) stored in a data memory while retaining the fieldbus address of the universal slave, wherein a product slave corresponds to a slave profile if the product slave has all of the properties of this slave profile and extends these properties by supplementary data (70),
- means (D) for transferring the planned slave profile to the fieldbus master (2) of the fieldbus system (1).

16. Engineering system according to Claim 15, the means of which for generating the at least one field device object additionally comprises means (U) for reading profile information of the field device (3) from the fieldbus master (2) and means for generating the slave profile (50) from the read profile information.

17. Engineering system according to Claim 16, the means of which for generating the at least one field device object additionally comprises means (M) for migrating or importing the slave profile (50) from a stored planning.

## Revendications

1. Procédé pour la projection d'un système de bus de terrain (1) avec un maître de bus de terrain (2) et au moins un appareil de terrain (3), avec les étapes suivantes :
- production d'un objet de maître de bus de terrain (20) dans un système d'ingénierie (10), qui reproduit le maître de bus de terrain du système de bus de terrain à projeter ;
- production d'un objet de bus de terrain (40) dans le système d'ingénierie, qui reproduit un bus de terrain (4) du système de bus de terrain à projeter ;
- production d'au moins un objet d'appareil de terrain dans le système d'ingénierie, lequel reproduit l'au moins un appareil de terrain (3), dans lequel chaque objet d'appareil de terrain est tout d'abord projeté en tant qu'esclave universel (30 à 33) avec un profil d'esclave (50 à 53) et une adresse de bus de terrain (60 à 63) unique, dans lequel le profil d'esclave contient les propriétés de l'appareil de terrain (3) reproduit au moyen de l'objet d'appareil de terrain, requises par le maître de bus de terrain pour la commande de la communication par l'intermédiaire du bus de terrain, en particulier le nombre et la nature des entrées et des sorties par l'intermédiaire desquelles l'appareil de terrain (3) reçoit et envoie des données par l'intermédiaire du bus de terrain (4),
- production d'au moins un profil d'esclave projeté au moyen de la substitution de l'esclave universel (30 à 33) par un esclave de produit (300 à 312) correspondant à son profil d'esclave (50 à 53) à partir d'un catalogue de produits (80) stocké dans une mémoire de données avec maintien de l'adresse de bus de terrain (60 à 63) de l'esclave universel (30 à 33), dans lequel un esclave de produit (300 à 312) correspond à un profil d'esclave (50 à 53) si l'esclave de produit possède toutes les propriétés de ce profil d'esclave (50 à 53) et élargit ces propriétés à des données supplémentaires (70),
- transmission de l'au moins un profil d'esclave projeté au maître de bus de terrain.

2. Procédé selon la revendication 1,
**caractérisé en ce qu'**il est défini au moins un critère de vérification pour une substituabilité d'un esclave universel (30 à 33) par un esclave de produit (300 à 312), la substituabilité d'un esclave universel (30 à 33) par un esclave de produit (300 à 312) prévu en tant que substitut à l'esclave universel (30 à 33) est vérifiée automatiquement à l'aide de l'au moins un critère de vérification et l'esclave universel (30 à 33) n'est ensuite substitué par cet esclave de produit (300 à 312) que si le résultat de la vérification de la substituabilité est positif.

3. Procédé selon la revendication 2,
**caractérisé en ce qu'**en tant qu'au moins un critère de vérification, il est défini que l'esclave de produit (300 à 312) correspond au profil d'esclave (50 à 53) de l'esclave universel (30 à 33) ou est déterminé pour le même système de bus de terrain (1) comme l'esclave universel (30 à 33) ou est conforme à un type de base de l'esclave de produit (300 à 312) et de l'esclave universel (30 à 33).

4. Procédé selon la revendication 2 ou 3,
**caractérisé en ce que**, pour la substitution d'un esclave universel (30 à 33), un esclave de produit (300 à 312) est sélectionné manuellement à partir du catalogue de produits (80).

5. Procédé selon l'une des revendications précédentes, **caractérisé en ce qu'**un esclave universel (30 à 33) à substituer par un esclave de produit (300 à 312) est sélectionné, une quantité de sélection (81) d'esclaves de produit (300 à 312) correspondant au profil d'esclave (50 à 53) de l'esclave universel (30 à 33) sélectionné est établie automatiquement à partir du catalogue de produits (80), et l'esclave universel (30 à 33) sélectionné est substitué par un esclave de produit (300 à 312) de la quantité de sélection (81).

6. Procédé selon l'une des revendications précédentes, **caractérisé en ce qu'**à au moins un profil d'esclave (50 à 53) est associé exactement un esclave de produit (300 à 312) correspondant au profil d'esclave (50 à 53), et chaque esclave universel (30 à 33) dont le profil d'esclave (50 à 53) est ainsi associé à un esclave de produit (300 à 312) est substitué automatiquement par l'esclave de produit (300 à 312) associé à son profil d'esclave (50 à 53).

7. Procédé selon l'une des revendications précédentes, **caractérisé en ce qu'**au moins une quantité d'esclaves (34, 35) de plusieurs esclaves universels (30 à 33) est substituée par un multi-esclave de produit (313, 314), qui est constitué de plusieurs esclaves de produit internes (309 à 312), de telle sorte que chaque esclave universel (30 à 33) de la quantité d'esclaves (34, 35) soit substitué par un esclave de produit interne (309 à 312), correspondant à son profil d'esclave (50 à 53), du multi-esclave de produit (313, 314), et chaque esclave de produit interne (309 à 312) du multi-esclave de produit (313, 314) substitue un esclave universel (30 à 33) de la quantité d'esclaves (34, 35).

8. Procédé selon la revendication 7,
**caractérisé en ce qu'**une quantité d'esclaves (34, 35) de plusieurs esclaves universels (30 à 33) à substituer respectivement par un esclave de produit (300 à 312) est sélectionnée, une quantité de sélection (81) de multi-esclaves de produit (313, 314) qui peuvent substituer respectivement la quantité d'esclaves (34, 35) sélectionnée est établie automatiquement à partir du catalogue de produits (80), et la quantité d'esclaves (34, 35) sélectionnée est substituée par un multi-esclave de produit (313, 314) de la quantité de sélection (81).

9. Procédé selon la revendication 7 ou 8,
**caractérisé en ce qu'**à au moins une quantité de profils de profils d'esclave (50 à 53) est associé exactement un multi-esclave de produit (313, 314) correspondant à la quantité de profils, qui comprend des esclaves de produit internes (309 à 312) correspondant aux profils d'esclave (50 à 53) de la quantité de profils, et **en ce qu'**au moins une quantité d'esclaves (34, 35), dont la quantité de profils est ainsi associée à un multi-esclave de produit (313, 314), est substituée automatiquement par le multi-esclave de produit (313, 314) associé à sa quantité de profils.

10. Procédé selon la revendication 9,
**caractérisé en ce que**, pour un multi-esclave de produit (313, 314) qui est associé à une quantité de profils en laquelle peuvent s'organiser différentes quantités d'esclaves (34, 35), une combinaison de quantités d'esclaves (34, 35) deux à deux disjointes est sélectionnée parmi ces différentes quantités d'esclaves (34, 35), et chaque quantité d'esclaves (34, 35) de cette combinaison est substituée automatiquement par le multi-esclave de produit (313, 314).

11. Procédé selon la revendication 10,
**caractérisé en ce qu'**une combinaison de quantités d'esclaves (34, 35) deux à deux disjointes est sélectionnée automatiquement à l'aide des adresses de bus de terrain (60 à 63) des esclaves universels (30 à 33).

12. Procédé selon la revendication 10 ou 11,
**caractérisé en ce que** différentes combinaisons possibles de quantités d'esclaves (34, 35) deux à deux disjointes sont établies automatiquement à l'aide des adresses de bus de terrain (60 à 63) des esclaves universels (30 à 33) et l'une de ces combinaisons établies est sélectionnée manuellement.

13. Procédé selon l'une des revendications 10 à 12, **caractérisé en ce qu'**est établie une liste de tous les esclaves universels (30 à 33) avec un profil d'esclave (50 à 53) issu de la quantité de profils à laquelle correspond le multi-esclave de produit (313, 314), et une combinaison de quantités d'esclaves (34, 35) deux à deux disjointes est rassemblée manuellement à partir des esclaves universels (30 à 33) de la liste établie, dans lequel il est surveillé automatiquement que chaque quantité d'esclaves (34, 35) rassemblée comprend la quantité de profils à laquelle correspond le multi-esclave de produit (313, 314), et les quantités d'esclaves (34, 35) rassemblées sont deux à deux disjointes.

14. Procédé selon l'une des revendications 9 à 13, **caractérisé en ce que** des quantités d'esclaves (34, 35) sont substituées dans une succession ordonnée selon leurs cardinalités par des multi-esclaves de produit (313, 314) correspondant à leurs quantités de profils respectives.

15. Système d'ingénierie (10) pour une projection d'un système de bus de terrain (1), qui comprend les éléments suivants :
- des moyens pour la production d'un objet de maître de bus de terrain (20), qui reproduit un maître de bus de terrain (2) du système de bus de terrain à projeter ;
- des moyens pour la production d'un objet de bus de terrain (40), qui reproduit un bus de terrain (4) du système de bus de terrain (1) à projeter ;
- des moyens pour la production d'au moins un objet d'appareil de terrain, qui reproduit au moins un appareil de terrain (3) du système de bus de terrain (1) à projeter, dans lequel chaque objet d'appareil de terrain est projeté en tant qu'esclave universel (30 à 33) avec un profil d'esclave (50 à 53) et une adresse de bus de terrain (60) unique, dans lequel le profil d'esclave contient les propriétés de l'appareil de terrain reproduit au moyen de l'objet d'appareil de terrain, requises par le maître de bus de terrain pour la commande de la communication par l'intermédiaire du bus de terrain, en particulier le nombre et la nature des entrées et des sorties par l'intermédiaire desquelles l'appareil de terrain (3) reçoit et envoie des données par l'intermédiaire du bus de terrain (4),
- des moyens pour la production d'au moins un profil d'esclave projeté au moyen de la substitution de l'esclave universel par un esclave de produit (300 à 312) correspondant à son profil d'esclave à partir d'un catalogue de produits (80) stocké dans une mémoire de données avec maintien de l'adresse de bus de terrain de l'esclave universel, dans lequel un esclave de produit correspond à un profil d'esclave si l'esclave de produit possède toutes les propriétés de ce profil d'esclave et élargit ces propriétés à des données supplémentaires (70),
- des moyens (D) pour la transmission du profil d'esclave projeté au maître de bus de terrain (2) du système de bus de terrain (1).

16. Système d'ingénierie selon la revendication 15, dont les moyens pour la production de l'au moins un objet d'appareil de terrain comprennent de plus des moyens (U) pour l'extraction d'informations de profil de l'appareil de terrain (3) à partir du maître de bus de terrain (2) et des moyens pour la production du profil d'esclave (50) à partir des informations de profil extraites.

17. Système d'ingénierie selon la revendication 16, dont les moyens pour la production de l'au moins un objet d'appareil de terrain comprennent de plus des moyens (M) pour la migration ou l'importation du profil d'esclave (50) à partir d'une projection mémorisée.
